# EUROPEAN PATENT SPECIFICATION

(11) **EP 1 935 722 B1**
(45) Date of publication and mention of the grant of the patent: **14.10.2009**
(21) Application number: 07122782.1
(22) Date of filing: 10.12.2007
(51) Int. Cl.: B60R 13/02, F16B 5/06

(54) **Vehicle interior trim clip**
Innenzubehörklammer für ein Fahrzeug
Clip de garniture intérieure de véhicule

(30) Priority: 22.12.2006 GB 0625719
(43) Date of publication of application: 25.06.2008
(73) Proprietor: Nissan Motor Manufacturing (UK) Limited, Cranfield, Bedfordshire MK43 0DB (GB)
(72) Inventor: Johnson, Murray Nissan Motor Facturing (UK) Ltd., Cranfield, Bedfordshire MK43 0DB (GB)
(74) Representative: Hufton, Victoria Alice

(56) References cited:
- EP-A- 1 044 850
- US-A1- 2007 176 399

## Description

This invention relates to a clip for an interior trim component of a vehicle. The invention is exemplified herein as a clip for attaching a trim panel to the interior of a vehicle body, such as the A-pillar beside the vehicle windscreen or a B-, C- or D-pillar that frames the doors and/or the rear windscreen.

The primary function of a vehicle interior trim clip is to attach an interior trim member to an underlying structure such as a vehicle body. The clip is usually embodied as a plastics injection moulding having a base defining a mating face that lies against the underlying structure in use and various formations moulded integrally with the base that perform the various functions of the clip. For example, attachment formations such as snap-fit engagement formations are provided for attachment of the clip to the structure and supporting formations are provided for supporting the trim member on the clip thus attached. Bias means such as a resilient finger may also be provided to pre-load the trim member upon attachment to the clip, hence reducing rattles and squeaks in use of the vehicle which occur due to movement of trim members. Alternatively, the trim clip may be integrated into the interior trim member. EP1044850 describes an interior trim member for a sill cover according to the preamble of claim 1. This sill cover is arranged to fold over the top of the sill to cover the edge of the carpet and the door frame welt before being clipped into the sill during assembly.

The supporting formations acting between the trim member and the clip usually provide for removal of the trim member from the underlying structure for the purpose of maintenance or replacement. Also, where the trim member conceals part of an airbag system, the attachment formations must allow the trim member to lift away from the underlying structure to make space for airbag deployment. Yet, the attachment formations must retain at least part of the trim member upon airbag deployment to ensure that the trim member cannot cause injury as the airbag inflates during deployment.

The clip may be of considerable complexity as it usually has various functions beside those mentioned above. For example, supporting formations may be provided for locating items that need to be concealed between the trim member and the underlying structure. Such items may include wiring loom elements and hoses such as sunroof drain tubes. The clip may also locate components of an airbag system.

Location of airbag system components is a particular feature of the pillar trim clips that exemplify the invention herein. For example, an A-pillar trim member commonly conceals a strip of plastics webbing being a tether for a curtain airbag that extends rearwardly from the A-pillar. The tether guides deployment of the curtain airbag along a desired path, so that the airbag inflates inboard of the vehicle windows and outboard of the occupants' heads where it is particularly needed.

An A-pillar trim clip may conveniently be used to retain the tether concealed between the A-pillar trim member and the A-pillar structure itself. The clip must hold the tether reliably in a desired position until the airbag is deployed. Upon deployment, the clip must release the tether in the direction demanded by deployment, and must also release the A-pillar trim member from the A-pillar structure to an extent necessary to free the tether. Prior clip designs require considerable effort to ensure reliable and effective release of both the tether and the trim.

Another issue is that multiple clips are usually employed to attach a trim component to an underlying structure. For example, an A-pillar trim member may be retained by three or more clips spaced along the length of the A-pillar structure. Tooling costs and economies of scale demand that, where possible, identical clips are used at each location. This restricts design freedom of the A-pillar structure, for example requiring a castellated shape with uniform mounting/receiving features such as platforms pressed into the pillar structure at spaced locations corresponding to the desired locations of the clips. Such features compromise the shape and strength of the pillar structure and may involve additional manufacturing operations. The alternative is to use differently-shaped clips, one for each location adapted to the local shape of the pillar structure at that location, but this loses the benefits of identical clips.

The difficulty of designing a clip that can be used at various locations along a structural member adds to the problems suffered by prior art trim clips. For example, a vehicle pillar structure commonly comprises two or more internal faces defining a hollow box section, those faces abutting along an edge. The faces of the pillar structure are rarely flat or oriented at the same angle relative to each other along their length. Thus, existing trim clips typically lie against one face of a pillar structure but not against another face of the pillar structure. This restricts design freedom and reduces the effectiveness of trim retention: secure connection between the pillar and the trim clip is desirable to reduce the possibility of the squeaks and rattles that could otherwise be caused by movement between the trim clip and the trim and/or between the trim clip and the pillar.

It is against this background that the present invention has been made.

According to the present invention there is provided an interior trim component configured to attach a trim member to the interior of a supporting structure of a vehicle, the interior trim component comprising: a base comprising first and second base portions, each of which carries, on a first side thereof, a respective attachment formation configured to attach the interior trim component to the supporting structure and, on a second side thereof, a respective supporting formation for supporting the trim member, wherein the base includes a hinged portion which joins the first and second base portions so as to allow the angle of intersection of the base portions to vary.

In practice the base of the trim component may require more than one base portion and/or more than one hinged portion.

In one embodiment, the angle of intersection of the base portions may be varied by flexing of the hinged portion (i.e. the base portions are integrally formed and flex about the hinged portion). Alternatively, the first and second base portions may be hinged together in the way of a conventional two-part hinge.

The invention is particularly suitable where the trim member is a pillar trim to be attached to a supporting structure in the form of a pillar of the vehicle. The invention is particularly suitable for use as a trim clip for the A-pillar of the vehicle beside the vehicle windscreen. Alternatively, the invention may be used as a trim clip for another pillar of the vehicle adjacent to a side window and/or the rear windscreen of the vehicle (e.g. C- , D- or E-pillar).

The invention facilitates the use of the interior trim component at various locations along a vehicle pillar as the component can adapt, by virtue of its hinged portion, to the local shape of the pillar at the various locations. It also allows an interior trim component of one design to be used on different types of vehicle. Such advantages reduce parts complexity and tooling costs.

The supporting formation on the second side of the second base portion preferably defines a retainer for an airbag tether of a vehicle airbag.

The retainer may define an engagement surface for engagement with a lip of the trim member and is arranged so that, in use, the airbag tether is retained by the retainer and during movement of the airbag tether upon airbag deployment the airbag tether bears against the lip to disengage the lip of the trim member from the engagement surface. In a modification, the retainer is configured so that the airbag tether bears against an end portion of the trim member, rather than the lip. Particularly, the interior trim component is defined by jaws for retaining the airbag tether. In this embodiment, the engagement surface is defined on a side of a first one of the jaws which faces the second one of the jaws. In one embodiment, for example, the retainer is defined by jaws for retaining the airbag tether.

In an alternative embodiment, the retainer is defined by jaws for retaining the airbag tether, but in which a first one of the jaws defines an engagement surface on a side of the first one of the jaws facing away from a second one of the jaws so that, in use, the airbag tether and the lip of the trim member lie on opposite sides of the first one of the jaws.

The first one of the jaws may be provided with a rounded free end to ease movement of the lip around the free end during engagement between the lip and the engagement surface.

By way of example, the supporting formation on the second side of the first base portion may include jaws for retaining a projection on the trim member.

The jaws on the second side of the first base portion may include a formation which is shaped to engage with the projection on the trim member so as to retain the projection within said jaws. For example, the formation may take the form of an inwardly-facing hook.

Conveniently, the supporting formation on the second side of the first base portion further includes a resilient member for bearing against the projection on the trim member when it is received within the jaws of said supporting formation.

The interior trim component may further comprise at least one further supporting formation on the second side of the first or second base portion supporting a further feature of the vehicle.

The further supporting formation preferably comprises a curved jaw defining a recess.

A resilient member may be located within the recess for bracing against the further feature of the vehicle, in use.

It is an option for a biasing formation for biasing the supported trim member to be carried on the first or second base portion, on the second side thereof. The biasing formation may comprise a resilient member which bears against the supported trim member to bias the trim member outwardly from the interior trim component, thereby to place the supporting formations for the trim member under tension.

To provide strength to the biasing formation, it may have at least one integral strengthening web.

The attachment formation on the first side of each of the first and second base portions is conveniently adapted for engagement with a complementary formation on the supporting structure.

For example, the attachment formation on the first side of each of the first and second base portions may be a stud, hook, peg or projection for engagement within a hole on the supporting structure.

Each of the first and second base portions may be integrally formed with its respective attachment formation on its first side.

Also, each of the first and second base portions may be integrally formed with its respective supporting formation on its second side.

It will be appreciated that any of the optional features of the invention set out herein may be provided in the invention as set follows.

Furthermore, according to the present invention there is provided an interior trim component for attaching a trim member to the interior of a supporting structure of a vehicle, the interior trim component comprising at least one attachment formation for attaching the interior trim component to the supporting structure, and a retainer for retaining an airbag tether of a vehicle airbag, the retainer defining an engagement surface for engagement with a lip of the trim member and being arranged so that, in use, the airbag tether is retained by the retainer and during movement of the airbag tether upon airbag deployment the airbag tether bears against the lip to disengage the lip of the trim member from the engagement surface.

In order that the invention may be more readily understood, reference is made, by way of example, to the accompanying drawings in which:
Figure 1 is a side view of an interior trim clip being a first embodiment of the invention;
Figure 2 is a side view of the clip of Figure 1 in use, attaching an A-pillar trim to an A-pillar of a vehicle;
Figure 3 is a side view corresponding to Figure 2 but showing the A-pillar trim partially detached from the clip to be deflected aside during airbag deployment;
Figure 4 is a side view of an interior trim clip being a second embodiment of the invention; and
Figure 5 is a perspective view of the clip of Figure 4.

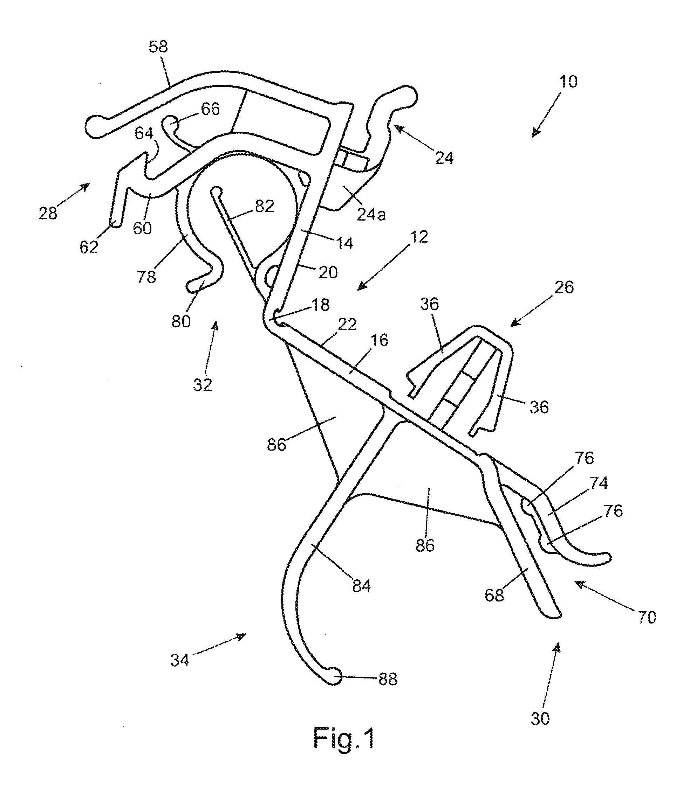

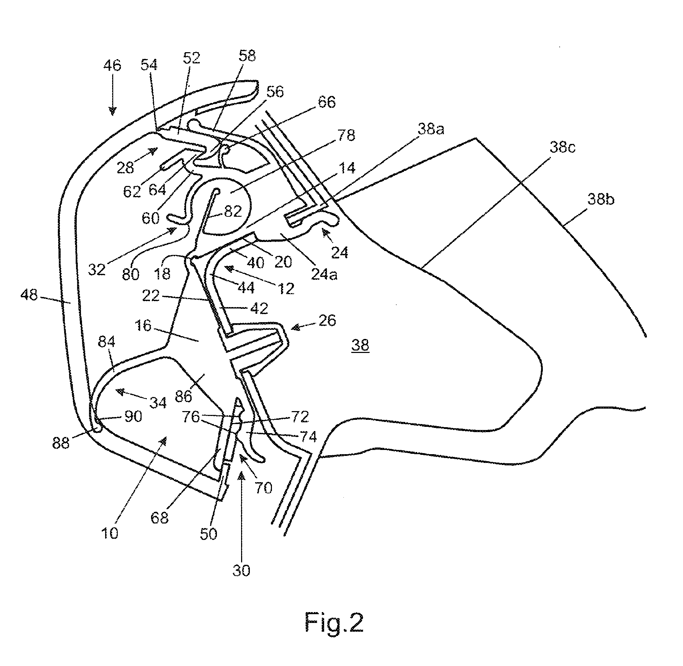

Referring firstly to Figures 1 and 2 of the drawings, an interior trim component in the form of a clip 10 of injection-moulded or extruded plastics material has an elongate base 12 that comprises first and second base portions 14, 16 joined by an integrally-moulded hinge 18. One side of the base 12 has mating faces 20, 22 and attachment formations 24, 26 for attaching the clip 10 to a supporting structure such as an A-pillar, as will be explained later with specific reference to Figure 2. The other side of the base 12 has supporting formations 28, 30, 32 for supporting a trim member such as an A-pillar trim, and for supporting other components such as a wiring loom and an airbag tether. A bias formation 34 in the form of a resilient finger is also provided among the supporting formations 28, 30, 32 to bias the supported trim and hence minimise rattling and squeaks. The various formations of the clip 10 will now be described in detail.

The base portions 14, 16 present generally flat mating faces 20, 22 respectively to one side of the base 12, the mating faces 20, 22 lying in mutually-intersecting planes whose angle of intersection may vary as allowed by flexing of the hinge 18. As moulded, the mating faces 20, 22 lie at an oblique angle with respect to each other but may be moved to other relative angles within the limits of elastic deformation of the hinge 18.

Respective attachment formations project from each mating face 20, 22 for attaching the clip 10 to a supporting structure such as the A-pillar shown in Figure 2. The attachment formation on the mating face 20 of the first base portion 14 is a hook 24 toward an outer end of the mating face 20, facing away from the hinge 18. The hook 24 includes a base 24a which presses against a periphery of a first hole in the supporting structure to hold the clip firmly in place. The attachment formation on the mating face 22 of the second base portion 16 is a stud 26 toward an outer end of the mating face 22. The stud 26 has opposed resilient barbs 36 for snap-fit engagement of the stud 26 in a second hole of the supporting structure.

Referring now specifically to Figure 2, a vehicle A-pillar 38 typically takes the form of a hollow box section of pressed steel construction comprising an inner panel 38a, an outer panel 38b and a reinforcement 38c. The inner panel 38a is a single panel, typically of pressed steel, comprising first and second surfaces 40, 42 that are approximately planar and intersect at a radiused edge 44. The surfaces 40, 42 lie at slightly over 90° with respect to each other at this location along the A-pillar 38. The mating faces 20, 22 of the base portions 14, 16 are similarly oriented to lie against the respective surfaces 40, 42 when the base portions 14, 16 are flexed about the hinge 18 to the necessary extent. The angle between the surfaces 40, 42 may vary along the length of the A-pillar 38; an advantage of the invention is that, by virtue of the hinge 18, the angle between the base portions 14, 16 can be varied to match. Thus, a single design of clip 10 can be employed at two, three or more different locations along the A-pillar 38.

In use, the hook 24 is engaged in the first hole (not numbered) in the first surface 40 of the inner panel 38a to give temporary support to the clip 10, thus holding the mating face 20 of the first base portion 14 against the first surface 40. Then, the clip 10 is bent around the edge 44 about the hinge 18 before the stud 26 is engaged in snap-fit manner into the second hole (not numbered) in the second wall 42 of the inner panel 38a of the A-pillar 38. The mating face 22 of the second base portion 16 then lies against the second wall.

Once the clip 10 is fixed to the A-pillar 38 in this way, an A-pillar trim 46 may be engaged with the clip 10. The A-pillar trim 46 comprises a convex generally C-section panel 48 having integral inwardly-projecting fixings 50, 52 co-operable with the clip 10. One fixing is a lip 50 at one edge of the panel 48. The other fixing is a projection 52 near the other edge of the panel 48 that is connected to the panel 48 by a narrow neck 54 whereby the panel 48 is resiliently hingeable with respect to the projection 52. The projection 52 has a rounded end and a hook formation 56 to one side for snap-fit attachment to the clip 10.

On the side of the base 12 opposed to the mating faces 20, 22, the first supporting formation 28 of the clip 10 is co-operable with the projection 52 of the A-pillar trim 46. That formation 28 comprises outer and inner jaws 58, 60 extending from an outer end of the first base portion 14. The jaws 58, 60 lie substantially parallel to each other and project initially orthogonally from the first base portion 14 before curving inwardly relative to the occupant compartment of the vehicle. The inner jaw 60 has an inclined ramp 62 on its tip for guiding in the rounded end of the projection 52 during assembly. The inner jaw 60 further includes an inwardly-facing hook or barb formation 64 that is engageable in snap-fit manner with the hook formation 56 of the projection 52, and an inwardly-facing resilient finger 66 that bears against the rounded end of the projection 52 to keep the hook formations 56, 64 in engagement without squeaks or rattles.

The second supporting formation 30 is co-operable with the lip 50 of the A-pillar trim 46. That formation 30 comprises a substantially planar tongue 68 extending from the second base portion 16 inclined away from the stud 26. The tongue 68 terminates in a free end behind which the lip 50 engages. The outer side of the free end of the tongue 68 is rounded to ease movement of the lip 50 around the free end before said engagement. Alternatively, or in addition, the lip 50 may be rounded so as to ease its movement over the free end of the tongue 68.

The tongue 68 of the second supporting formation 30 also serves as a jaw of a retainer 70 that retains an airbag tether 72 by lightly gripping the tether when stowed. The other jaw 74 of the retainer extends generally parallel to the tongue 68 on the same side as the mating face 22, terminates in an outwardly-curved free end and has integral gripping formations 76 that retain the tether 72 in the retainer 70 until airbag deployment occurs.

It will be apparent from Figure 2 that the lip 50 and the tether 72 are on the same side of the tongue 68 when assembled, with the lip 50 engaged within a mouth of the jaws 68, 72 and the tether outboard of the lip 50 towards the perimeter of the vehicle.

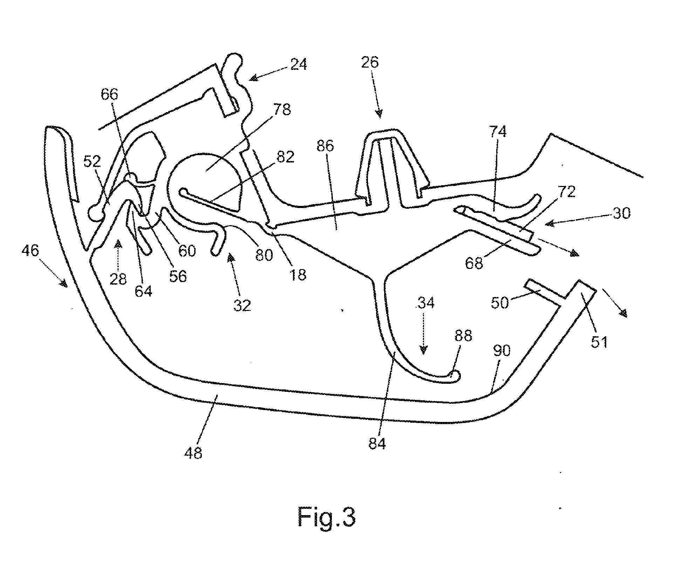

Figure 3 shows how the tether 72 is free to slide out of the retainer 70 upon airbag deployment. Advantageously, the tether 72 encounters the lip 50 during that movement and, in so doing, disengages the lip 50 from the free end of the tongue 68. This releases one side of the A-pillar trim 46 from the clip 10 to allow the tether 72 to move freely to its desired location. Meanwhile the other side of the A-pillar trim 46 can hinge relative to the clip 10 but remains attached to the clip 10 by virtue of the trim projection 52 being engaged with the first supporting formation 28 of the clip 10 while hinging about the neck 54.

It is also possible to configure the jaws 68, 74 slightly differently so that as the tether 72 is disengaged from the retainer 70 it encounters the end projection 51 of the A-pillar trim 46, rather than the lip 50.

In a modification (not shown), there is no need to provide a pair of jaws to define the retainer 70 (i.e. the second jaw 74 is removed), so that the airbag tether 72 is simply retained by engagement (e.g. through light gripping) with the tongue 68. The tether 72 is held in its stowed position by the tongue 68 holding the tether 72 against the surface 42 of the panel.

Referring again to Figure 2, on assembly the A-pillar trim 46 is firstly attached to the clip 10 by engagement of the projection 52 into the jaws 58, 60 of the first supporting formation 28 until the hook formations 56, 64 engage with each other. Then, the A-pillar trim 46 is pivoted about the projection 52 which hinges about its neck 54 until the lip 50 engages behind the tongue 68 of the second supporting formation 30. The A-pillar trim 46 may deform resiliently for that purpose. The resilience of the A-pillar trim 46 also helps to retain the A-pillar trim relative to the clip 10.

The third supporting formation 32 is for receiving and retaining a wiring loom element to be concealed behind the A-pillar trim 46. More than one such formation may be provided and may have other purposes such as locating a sunroof drain tube or a radio antenna cable. The third supporting formation 32 comprises a C-section recess partially defined by a curved jaw 78 that extends from the inner jaw 60 of the first supporting formation 28 toward the hinge 18. The jaw 78 terminates in an inclined ramp 80 for guiding in the wiring loom element (not shown) during assembly. A resilient finger 82 within the C-section recess of the third supporting formation 32 braces the wiring loom element to hold it in place without squeaks or rattles.

The bias formation 34 comprises a resilient finger 84 that depends from the second base portion 16. The finger 84 is supported by integral webs 86 extending to the second base portion 16 and, on one side, also to the tongue 68 of the second supporting formation 30. The finger 84 is curved outwardly and terminates in a rounded end 88 to bear against the inner face 90 of the A-pillar trim 46 when the A-pillar trim 46 is engaged with the clip 10 as aforesaid. This biases the A-pillar trim 46 outwardly with respect to the clip 10, placing the first and second supporting formations 28, 30 under tension. This helps to prevent squeaks and rattles that could otherwise be caused by relative movement of the A-pillar trim 46 with respect to the clip 10 and helps to engage the lip 50 and the tongue 68 by applying a tensioning force to their surfaces.

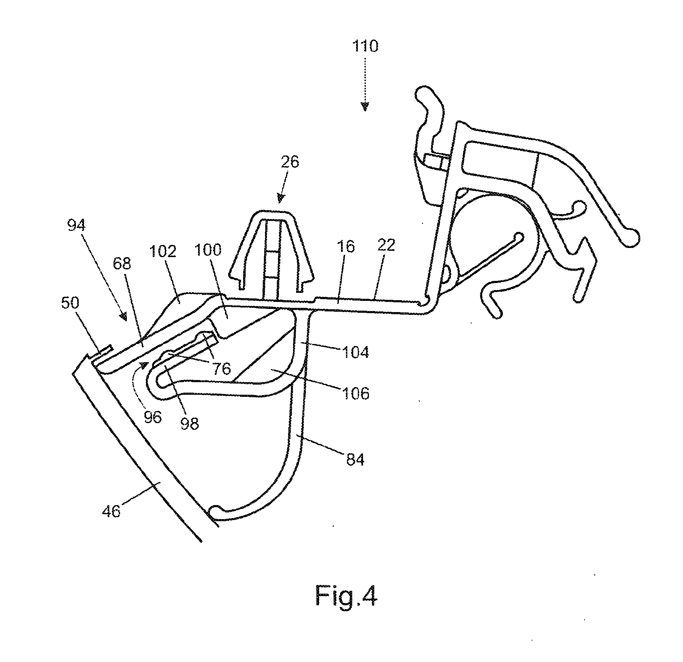

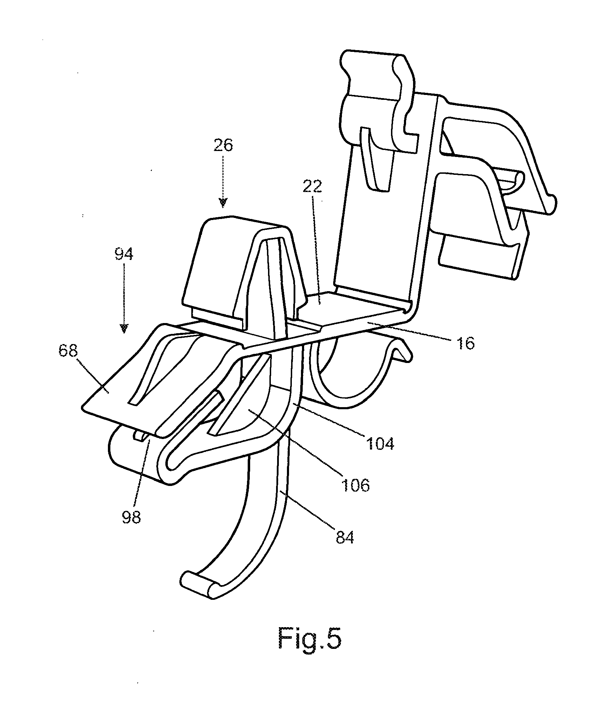

Figures 4 and 5 show a second embodiment of the invention, clip 110 that is broadly similar to clip 10 of the first embodiment. Like numerals are used for like parts. The difference between the embodiments lies in the second supporting formation 94 that cooperates in use with the lip 50 of the A-pillar trim 46 (not shown in Figure 5).

In the second embodiment, the second supporting formation 94 again comprises a substantially planar tongue 68 extending from the second base portion 16 inclined away from the stud 26. Again, the tongue 68 terminates in a free end behind which the lip 50 of the A-pillar trim 46 engages, and the inner side of the free end, relative to the occupant compartment, is rounded to ease movement of the lip 50 around the free end before said engagement. Also, as before, the tongue 68 serves as a jaw of a retainer 96 for retaining an airbag tether (not shown in Figures 4 and 5); the other jaw 98 of the retainer 96 extends generally parallel to the tongue 68 and has integral gripping formations 76 that retain the tether in the retainer 96 until airbag deployment occurs.

The retainer 96 is differently configured in the second embodiment. Most significantly, the jaw 98 of the retainer 96 lies on the side of the tongue 68 opposed to the mating face 22. Thus, the lip 50 of the A-pillar trim 46 and the tether lie on opposite sides of the tongue 68. This means that a tether sliding out of the retainer 96 upon airbag deployment will encounter the A-pillar trim 46 part way along the trim 46, rather than encountering the lip 50 itself.

The clip 110 of the second embodiment has related differences in detail. In this instance, for example, the tongue 68 is integrally moulded on one side with a stop 100 extending to the mating face 22 and on the other side with a strengthening web 102. The stop 100 limits insertion of the tether into the retainer 96. The jaw 98 of the retainer 96 is supported by a J-shaped resilient member 104 branching from the finger 84 that depends from the second base portion 16. A web 106 strengthens the member 104.

## Claims

1. An interior trim component (10; 110) configured to attach a trim member (46) to the interior of a supporting structure (38) of a vehicle, the interior trim component (10) comprising:
a base (12) comprising first and second base portions (14, 16), each of which carries, on a first side (20, 22) thereof, a respective attachment formation (24, 26) configured to attach the interior trim component (10) to the supporting structure (38) and, on a second side thereof, a respective supporting formation (28, 30; 28, 94) for supporting the trim member (46),
**characterised in that** the base includes a hinged portion (18) which joins the first and second base portions (14, 16) so as to allow the angle of intersection of the base portions (14, 16) to vary.

2. The interior trim component (10; 110) as claimed in claim 1, wherein the hinged portion (18) is integrally moulded with the first and second base portions (14, 16).

3. The interior trim component (10; 110) as claimed in claim 1 or claim 2, wherein the supporting formation (30; 94) on the second side of the second base portion (16) defines a retainer (70; 96) for an airbag tether (72) of a vehicle airbag.

4. The interior trim component (10) as claimed in claim 3, wherein the retainer (70) defines an engagement surface for engagement with a lip (50) of the trim member (46) and being arranged so that, in use, the airbag tether (72) is retained by the retainer (70) and, during movement of the airbag tether (72) upon airbag deployment, the airbag tether (72) bears against the lip (50) to disengage the lip (50) of the trim member (46) from the engagement surface.

5. The interior trim component (10; 110) as claimed in any one of claims 1 to 4, wherein the supporting formation (28) on the second side of the first base portion (14) includes jaws (58, 60) for retaining a projection (52) on the trim member (46) and a resilient member (66) for bearing against the projection (52) on the trim member (46) when it is received within the jaws (58, 60) of said supporting formation (28).

6. The interior trim component (10; 110) as claimed in any one of claims 1 to 5, further comprising at least one further supporting formation (32) on the second side of the first or second base portion (14, 16) for supporting a further feature of the vehicle.

7. The interior trim component (10; 110) as claimed in any one of claims 1 to 6, wherein the first or second base portion (14, 16) carries, on the second side thereof, a biasing formation (34) for biasing the supported trim member (46).

8. The interior trim component (10; 110) as claimed in claim 7, wherein the biasing formation (34) comprises a resilient member (84) which bears against the supported trim member (46) to bias the trim member (46) outwardly from the interior trim component (10), thereby to place the supporting formations (28, 30) for the trim member (46) under tension.

9. The interior trim component (10, 110) according to any one of the preceding claims, further comprising a retainer (70; 96) for retaining an airbag tether (72) of a vehicle airbag, the retainer (70; 96) defining an engagement surface for engagement with a lip (50) of the trim member (46) and being arranged so that, in use, the airbag tether (72) is retained by the retainer (70) and, during movement of the airbag tether (72) upon airbag deployment, the airbag tether (72) bears against the lip (50) to disengage the lip (50) of the trim member (46) from the engagement surface.

10. The interior trim component (10) as claimed in claim 9, further comprising a supporting formation (28, 30) for supporting the trim member (46).

## Patentansprüche

1. Innenverkleidungsbauteil (10; 110), das dazu ausgebildet ist, ein Verkleidungsglied (46) an der Innenseite einer Tragstruktur (38) eines Fahrzeugs zu befestigen, wobei das Innenverkleidungsbauteil (10) Folgendes umfasst:
eine Basis (12), die einen ersten und eine zweiten Basisabschnitt (14, 16) umfasst, die jeweils an einer ersten Seite (20, 22) desselben ein jeweiliges Befestigungsgebilde (24, 26) tragen, das dazu ausgebildet ist, das Innenverkleidungsbauteil (10) an der Tragstruktur (38) zu befestigen und an einer zweiten Seite desselben ein jeweiliges Haltegebilde (28, 30; 28, 94) zum Halten des Verkleidungsglieds (46) tragen,
**dadurch gekennzeichnet, dass** die Basis einen Gelenkabschnitt (18) umfasst, der den ersten und den zweiten Basisabschnitt (14, 16) verbindet, um zuzulassen, dass der Schnittwinkel der Basisabschnitte (14, 16) veränderlich ist.

2. Innenverkleidungsbauteil (10; 110) nach Anspruch 1, wobei der Gelenkabschnitt (18) integral mit dem ersten und dem zweiten Basisabschnitt (14, 16) geformt ist.

3. Innenverkleidungsbauteil (10; 110) nach Anspruch 1 oder Anspruch 2, wobei das Haltegebilde (30; 94) an der zweiten Seite des zweiten Basisabschnitts (16) eine Halterung (70; 96) für eine Airbag-Halteleine (72) eines Fahrzeug-Airbags bildet.

4. Innenverkleidungsbauteil (10) nach Anspruch 3, wobei die Halterung (70) eine Eingriffsfläche für den Eingriff mit einer Nase (50) des Verkleidungsglieds (46) definiert und so angeordnet ist, dass in Gebrauch die Airbag-Halteleine (72) von der Halterung (70) festgehalten wird und während Bewegung der Airbag-Halteleine (72) beim Auslösen des Airbags die Airbag-Halteleine (72) gegen die Nase (50) wirkt, um die Nase (50) des Verkleidungsglieds (46) von der Eingriffsfläche zu lösen.

5. Innenverkleidungsbauteil (10; 110) nach einem der Ansprüche 1 bis 4, wobei das Haltegebilde (28) an der zweiten Seite des ersten Basisabschnitts (14) Backen (58, 60) zum Festhalten eines Vorsprungs (52) am Verkleidungsglied (46) und ein elastisches Glied (66) zum Wirken gegen den Vorsprung (52) am Verkleidungsglied (46), wenn er in den Backen (58, 60) des genannten Haltegebildes (28) aufgenommen ist, umfasst.

6. Innenverkleidungsbauteil (10; 110) nach einem der Ansprüche 1 bis 5, weiter umfassend mindestens ein weiteres Haltegebilde (32) an der zweiten Seite des ersten oder des zweiten Basisabschnitts (14, 16) zum Halten eines weiteren Merkmals des Fahrzeugs.

7. Innenverkleidungsbauteil (10; 110) nach einem der Ansprüche 1 bis 6, wobei der erste oder der zweite Basisabschnitt (14, 16) an der zweiten Seite desselben ein Vorspanngebilde (34) zum Vorspannen des gehaltenen Verkleidungsglieds (46) trägt.

8. Innenverkleidungsbauteil (10; 110) nach Anspruch 7, wobei das Vorspanngebilde (34) ein elastisches Glied (84) umfasst, das gegen das gehaltene Verkleidungsglied (46) wirkt, um das Verkleidungsglied (46) vom Innenverkleidungsbauteil (10) nach außen vorzuspannen, um **dadurch** die Haltegebilde (28, 30) für das Verkleidungsglied (46) unter Zugspannung zu setzen.

9. Innenverkleidungsbauteil (10, 110) nach einem der vorangehenden Ansprüche, weiter umfassend eine Halterung (70; 96) zum Festhalten einer Airbag-Halteleine (72) eines Fahrzeug-Airbags, wobei die Halterung (70; 96) eine Eingriffsfläche zum Eingreifen mit einer Nase (50) des Verkleidungsglieds (46) umfasst und so angeordnet ist, dass in Gebrauch die Airbag-Halteleine (72) von der Halterung (70) festgehalten wird und während Bewegung der Airbag-Halteleine (72) beim Auslösen des Airbags die Airbag-Halteleine (72) gegen die Nase (50) wirkt, um die Nase (50) des Verkleidungsglieds (46) von der Eingriffsfläche zu lösen.

10. Innenverkleidungsbauteil (10) nach Anspruch 9, weiter umfassend ein Haltegebilde (28, 30) zum Halten des Verkleidungsglieds (46).

## Revendications

1. Composant de garniture intérieure (10 ; 110) configuré pour fixer un élément de garniture (46) à l'intérieur d'une structure de support (38) d'un véhicule, le composant de garniture intérieure (10) comprenant :
une base (12) comprenant des première et seconde parties (14, 16), qui portent chacune, sur un premier côté, (20, 22), une formation de fixation respective (24, 26) configurée pour fixer le composant de garniture intérieure (10) à la structure de support (38), et, sur un second côté, une formation de support respective (28, 30 ; 28, 94) pour supporter l'élément de garniture (46),
**caractérisé en ce que** la base comporte une partie articulée (18) qui joint les première et seconde parties de base (14, 16) de façon à permettre une variation de l'angle de l'intersection des parties de base (14, 16).

2. Composant de garniture intérieure (10 ; 110) selon la revendication 1, dans lequel la partie articulée (18) est moulée en tant que partie intégrante des première et seconde parties de base (14, 16).

3. Composant de garniture intérieure (10 ; 110) selon la revendication 1 ou la revendication 2, dans lequel la formation de support (30 ; 94) sur le second côté de la seconde partie de base (16) définit une retenue (70 ; 96) de longe d'airbag (72) d'un airbag d'un véhicule.

4. Composant de garniture intérieure (10) selon la revendication 3, dans lequel la retenue (70) définit une surface d'engagement pour l'engagement avec une lèvre (50) de l'élément de garniture (46) et agencée de telle sorte que, lors du fonctionnement, la longe d'airbag (72) soit retenue par la retenue (70) et, durant le mouvement de la longe d'airbag (72) lors du déploiement de l'airbag, la longe d'airbag (72) porte contre la lèvre (50) afin de désengager la lèvre (50) de l'élément de garniture (46) de la surface d'engagement.

5. Composant de garniture intérieure (10 ; 110) selon l'une quelconque des revendications 1 à 4, dans lequel la formation de support (28) sur le second côté de la première partie de base (14) comporte des mâchoires (58, 60) pour retenir une projection (52) sur l'élément de garniture (46) et un élément élastique (66) destiné à porter contre la projection (52) sur l'élément de garniture (46) quand elle est reçue dans les mâchoires (58, 60) de ladite formation de support (28).

6. Composant de garniture intérieure (10 ; 110) selon l'une quelconque des revendications 1 à 5, comprenant en outre au moins une autre formation de support (32) sur le second côté de la première ou seconde partie de base (14, 16) pour supporter un autre mécanisme du véhicule.

7. Composant de garniture intérieure (10 ; 110) selon l'une quelconque des revendications 1 à 6, dans lequel la première ou seconde partie de base (14, 16) porte, sur son second côté, une formation de charge préliminaire (34) pour charger préliminairement l'élément de garniture supporté (46).

8. Composant de garniture intérieure (10 ; 110) selon la revendication 7, dans lequel la formation de charge préliminaire (34) comprend un élément élastique (84) qui porte contre l'élément de garniture supporté (46) afin de charger préliminairement l'élément de garniture (46) vers l'extérieur depuis le composant de garniture intérieure (10), afin d'ainsi tendre les formations de support (28, 30) de l'élément de garniture (46).

9. Composant de garniture intérieure (10 ; 110) selon l'une quelconque des revendications précédentes, comprenant en outre une retenue (70 ; 96) pour retenir une longe d'airbag (72) d'un airbag de véhicule, la retenue (70 ; 96) définissant une surface d'engagement pour l'engagement avec une lèvre (50) de l'élément de garniture (46) et agencée de telle sorte que, lors du fonctionnement, la longe d'airbag (72) soit retenue par la retenue (70) et, durant le mouvement de la longe d'airbag (72) lors du déploiement de l'airbag, la longe d'airbag (72) porte contre la lèvre (50) afin de désengager la lèvre (50) de l'élément de garniture (46) de la surface d'engagement.

10. Composant de garniture intérieure (10) selon la revendication 9, comprenant en outre une formation de support (28, 30) pour supporter l'élément de garniture (46).
